(19) Europäisches Patentamt
European Patent Office
Office européen des brevets

(11) Publication number: **0 010 789**
**B1**

(12) **EUROPEAN PATENT SPECIFICATION**

(45) Date of publication of patent specification: **11.05.83**

(51) Int. Cl.³: **C 08 L 23/28,** C 08 L 11/00, C 08 K 5/00

(21) Application number: **79200537.3**

(22) Date of filing: **25.09.79**

# (54) Heat-curable, elastomer-forming composition crosslinked with 1,3-diamino propane and method for preparing the composition.

(30) Priority: **26.09.78 US 945944**

(43) Date of publication of application: **14.05.80 Bulletin 80/10**

(45) Publication of the grant of the patent: **11.05.83 Bulletin 83/19**

(84) Designated Contracting States: **BE DE FR GB IT NL SE**

(56) References cited:
**FR - A - 2 125 332**
**FR - A - 2 131 653**
**GB - A - 861 542**
**US - A - 2 395 493**
**US - A - 3 001 965**

**CHEMICAL ABSTRACTS, vol. 78, 1973 nr. 8, 26 february page 56, ref. 44814h Columbus, Ohio, US**

(73) Proprietor: **THE DOW CHEMICAL COMPANY**
**Dow Center 2030 Abbott Road Post Office Box 1967**
**Midland Michigan 48640 (US)**

(72) Inventor: **Brewbaker, James Lee**
**615 Coolidge**
**Midland, Michigan (US)**
Inventor: **Marzett, Rodrique Lenard**
**8508 Greenwell Springs Road Apt. 195 Baton Rouge**
**Parish of East Baton Rouge Louisiana (US)**

(74) Representative: **Urbanus, Henricus Maria, Ir. et al,**
**c/o Vereenigde Octrooibureaux Nieuwe Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England

# Heat-curable, elastomer-forming composition crosslinked with 1,3-diamino propane and method for preparing the composition.

This invention relates to heat-curable, elastomer-forming, chlorine- or bromine-containing halopolymer compositions and to cured elastomers prepared therefrom. A preferred embodiment is a halopolymer composition containing a 1,3-diaminopropane curing agent, a sulfur source, an acid acceptor and a synergistic prevulcanization inhibitor therefor.

Chlorine- or bromine-containing halopolymers, such as the chlorinated polymers of ethylene, are well known materials which serve in many useful applications in commerce. Certain of these materials, particularly the high molecular weight chlorinated ethylene polymers, possess properties such that they can be cured to form highly useful, low cost elastomer products. Several methods are known such as halogenated polyolefins, to vulcanize, cure, or crosslink such halopolymers to form useful elastomeric products. For example, crosslinking has been effected by reacting the halopolymer with organic peroxides, polyfunctional amines, aliphatic polyazo compounds, or a combination of sulfur, a Group II metal oxide, and rubber vulcanization accelerator. Among these, the reaction with an organic peroxide is prominent commercially due to the high degree of cure achieved thereby.

Nevertheless, the peroxide vulcanization of halogenated polyolefins, in particular, suffers from a number of significant problems, including the high cost of the peroxide curing agents and ester plasticizers which are typically used in such formulations. As a result, fully formulated chlorinated polyethylene, for example, has not been able to economically compete with other synthetic rubbers in its class, such as fully formulated polychloroprene.

Accordingly, workers in the art have searched for an effective curing system for halopolymers which would not require the use of organic peroxides. An example of such a system has been described by A. A. Lontsov et al. in *Kauch. Rezina 35*, 30 (1976), wherein a combination of hexamethylenediammonium sebacate, sulfur, and magnesium oxide was reported to successfully crosslink chlorinated polyethylene. Furthermore, US A 3,001,965 discloses a curing system for a high linear chlorosulfonated polyethylene comprising an aliphatic diamine admixed with 30—200% by weight of a normally liquid chlorinated paraffin wax based on the weight of the chlorosulfonated polyethylene. As further optional compounding agents prior to curing dipentamethylene thiuram tetrasulfide, litharge, magnesium oxide and titanium dioxide are disclosed.

In one embodiment, the present invention provides a heat-curable, elastomer-forming composition comprising a halopolymer and 1 to 15 parts of a 1,3-diaminopropane or salt per hundred parts by weight of the halopolymer. In another embodiment, it provides an improved method of heat-curing halopolymers with 1,3-diaminopropane or salt thereof as the aliphatic polyamine vulcanizing agent.

In a further embodiment, the present invention provides an improved heat-curable composition comprising an elastomer-forming, chlorine- or bromine-containing halopolymer such as chlorinated polyethylene; a 1,3-diaminopropane or salt thereof; a sulfur source; an acid acceptor; and a prevulcanization inhibitor combination comprising an amount of N-(cyclohexylthio)-phthalimide and N-nitrosodiphenylamine sufficient to provide an increase in both shelf-life and scorch safety.

Halopolymers which can be used in the practice of this invention are any of those which are known in the art to form elastomers by heat-curing with an aliphatic polyamine vulcanizing agent. Such halopolymers include the homopolymers and copolymers of halogen-containing monomers, such as 2-chloro-1,3-butadiene (the polymers of which are commonly known as polychloroprene), as well as the polymers obtained by post-halogenation in solution, in the molten state, or in aqueous suspension according to processes well known in the art. Exemplary halogenating agents which can be employed in such post-halogenation processes include molecular halogens such as chlorine or bromine, interhalogens such as bromochlorine, and sulfuryl halides such as sulfuryl chloride. Preferred halopolymers include the post-halogenated homopolymers, copolymers, and interpolymers of olefinic monomers such as ethylene, propylene, n-butylene and isobutylene. Particularly preferred halopolymers which can be used in the present invention are the elastomer-forming chlorinated polyethylenes derived by chlorination of a substantially linear, high density polyethylene which has a molecular weight of 100,000 up to 5 million, preferably 700,000 up to 3.5 million. Such linear high molecular weight polyethylene is well known in the art as are the methods for its preparation.

The degree of crystallinity and halogen content of such halopolymers can be varied to obtain a cured, elastomeric product having the properties desired by a user. However, the degree of crosslinking which can be obtained in the cured product will be moderately increased as the halogen content of the starting halopolymer is increased. With respect to chlorinated polyethylene, it appears to be advantageous to have a chlorine content greater than 25 percent in order to obtain an acceptable degree of crosslinking.

Chlorinated polyethylenes having chlorine contents of 20 to 45 percent and the desired crystallinity can be prepared by a number of methods including the well-known solution chlorination procedures. Prior to chlorination, the polyethylene preferably has a density between 0.935 and 0.985 and a crystallinity of at least 75 percent, and customarily in the range of 75 to 85 percent, as determined, for example, by differential thermal analysis. Subsequent to the chlorination, the

chlorinated polyethylenes are preferably, though not necessarily, characterized by having less than 2 percent crystallinity, desirably zero percent crystallinity, as determined by differential thermal analysis. Most advantageously, the resulting chlorinated polyethylenes will have a chlorine content greater than about 25 weight percent in order to obtain a commercially acceptable degree of crosslinking in the elastomer product.

As used herein, the term "1,3-diaminopropane" is intended to include the unsubstituted compound corresponding thereto as well as those wherein either the carbon or nitrogen moieties are singly or multiply substituted with alkyl, alkenyl, cycloalkyl, or aryl groups. The effectiveness of alkylsubstituted 1,3-diaminopropanes decreases with increasing substitution of the nitrogen moieties, i.e., the order of effectiveness of the substituted 1,3-diaminopropanes with respect to N,N'-substitution can be generalized as follows:

$$1°, 1° > 1°, 2° > 2°, 2° > 1°, 3° > 2°, 3° > 3°, 3°$$

In addition, it has been found that substituted 1,3-diaminopropanes are more effective than the unsubstituted compound and that, with respect to alkyl substitution, the effectiveness of a substituted 1,3-diaminopropane increases with increasing alkyl chain length. Consequently, the preferred 1,3-diaminopropanes will be selected accordingly.

When used in conjunction with an acid acceptor, the 1,3-diaminopropanes and salts are substantially equivalent in their effectiveness. Exemplary anions which may be used include carboxylate and dicarboxylate anions such as those derived from acetic acid, oxalic acid, succinic acid, and benzoic acid, and halides such as those derived from hydrogen chloride, hydrogen bromide, and hydrogen iodide, and sulfate.

The amount of a 1,3-diaminopropane or salt which is employed is an amount sufficient to cure the halopolymer to the desired degree and will generally range from 1 to 15 parts, preferably from 1 to 10 parts, per hundred parts halopolymer (hereinafter abbreviated as "phr"). The actual amount needed to effect the desired level of cure will depend upon the particular 1,3-diaminopropane or salt used as well as the relative proportions and strengths of the acid acceptor and sulfur source used as vulcanizing coagents as hereinbefore described. Generally, it has been found that an increase in the amount of 1,3-diaminopropane or salt will result in an increase in the extent of cure, a decrease in cure time, and a decrease in scorch time.

Certain acid acceptors are advantageously employed in combination with the 1,3-diaminopropane or salt to further enhance the curing of a halopolymer. Exemplary acid acceptors which may be used include the oxides, hydroxides, sulfides, carbonates, and phosphates of the alkali metals and alkaline earth metals and mixtures thereof. Of these, calcium hydroxide, calcium oxide, magnesium oxide, and tribasic potassium phosphate are preferred, especially calcium oxide and calcium hydroxide. Powdered molecular sieve has also been found to be effective. However, basic lead carbonate, zinc oxide, and tetraoctadecyl titanate have been found to have a deleterious effect on the curing properties of 1,3-diaminopropanes and their salts. Accordingly, the term "acid acceptor" as used herein is intended to include those compounds within that class which enhance the curing of halopolymers when using the 1,3-diaminopropane vulcanizing agents of the present invention. Guided by the exemplary listed compounds, and with only minor experimentation, a user will be able to readily choose an acid acceptor suitable for use in the present curing system. Generally, the acid acceptor may be employed in amounts ranging from 1 to 50 phr, but it is preferably used in amounts of 1 to 20 phr. It has been observed that an increase in the amount of acid acceptor will result in an increase in the extent of cure, but also in a decrease in the scorch time. Hence, these effects must be taken into consideration when choosing the amount of acid acceptor to be used.

The curing of a halopolymer with a 1,3-diaminopropane or salt is also advantageously enhanced by employing, in combination therewith, sulfur or a sulfur-containing compound such as sodium thiosulfate, sodium hydrosulfide, tetramethylthiuram disulfide, and dipentamethylene thiuram hexasulfide. Due to its ready availability and low cost, elemental sulfur is preferred. Similar to the effect of the acid acceptor, an increase in the amount of sulfur or sulfur-containing compound will increase the extent of cure and decrease the scorch time. Only a minor amount of sulfur or sulfur-containing compound is required to effect an enhanced cure. When elemental sulfur is used, for example, the amount may range from 0.1 to 10 phr; preferably, from 0.1 to 3 phr. Advantageously, however, the actual amount of sulfur or sulfur-containing compound employed should be adjusted relative to the amount of 1,3-diaminopropane or salt employed in order to keep total cure time low. Preliminary studies have shown that a ratio of 1 part elemental sulfur to 2.5 parts 1,3-diaminopropane or salt will give an acceptable balance between extent of cure and total cure time.

A minor amount of iodide or bromide ions in combination with the other vulcanization agents will beneficially affect the results of the present curing system. Iodide ions are preferred and should be employed in an amount such that the molar ratio of iodide ions to 1,3-diaminopropane or salt is less than 1:1, whereby both the extent of cure and, surprisingly, scorch time will be increased; larger amounts will decrease the extent of cure. The preferred molar ratio ranges from 0.2:1 to 0.4:1. It would appear that any suitable source of iodide ions may be used in the present system. Suitable sources

include sodium iodide and the alkyl iodides. If desired, the iodide ion can be provided by replacing a portion of the 1,3-diaminopropane or salt to be used with a 1,3-diaminopropane salt having iodide as the anion component.

Advantageously, the heat-curable compositions of the present invention will further contain a minor amount of a synergistic mixture of N-(cyclohexylthio)-phthalimide and N-nitrosodiphenylamine to extend shelf life and improve scorch time. Both N-(cyclohexylthio)-phthalimide and N-nitrosodiphenylamine are well-known, commercially available inhibitors for synthetic and natural rubbers. A sufficient amount of each of these additives will be used in combination to provide an increase in both shelf-life and scorch safety as compared to heat-curable compositions containing neither or only one of the inhibitors. Generally, this amount will be in the range of 1 to 3 phr, preferably about 2 phr, of N-nitrosodiphenylamine in combination with 0.1 to 2 phr, preferably 0.5 to 1 phr, of N-(cyclohexylthio)phthalimide.

In accordance with typical procedures used in the vulcanization art, the heat-curable compositions of the present invention will generally contain other conventional compounding ingredients such as, for example, reinforcing agents, fillers, antioxidants, and plasticizers. It is noteworthy that the present 1,3-diaminopropane curing system will permit the use of inexpensive hydrocarbon extending oils as well as the ester plasticizers commonly used with conventional peroxide-cure halogenated polyolefin formulations.

A heat-curable composition in accordance with the present invention is prepared by admixing a halopolymer, a 1,3-diaminopropane or salt, and other additives, as desired, by blending on a two-roll mill or in a Banbury mixer or other suitable apparatus until homogeneity of the formulation is achieved. In some instances, i.e., when the diamine or diamine salt is in the form of a greasy paste, it may be desirable to first heat the diamine or diamine salt and blend the resulting liquid with an inert solid, such as fumed silica. The so-formed blend can then be cooled, crushed, and added to the heat-curable composition in the form of a free-flowing powder, thus facilitating rapid mixing therewith. During preparation, care should be taken to maintain the heat-curable composition as cool as possible to avoid excessive heat buildup and premature curing. Compounding temperatures are preferably regulated in the range of 20° to 120°C. The resulting composition can be shaped by extrusion or other conventional means and cured by heating to a temperature in the range of 90° to 220°C. The time necessary to effect cure will depend upon the particular composition used and upon the temperature to which it is heated. Usually, such times will range from 2 minutes to 5 hours. Generally, the temperatures and time periods suitable for cure correspond to those commonly used in the rubber fabrication industry.

The following examples further illustrate the invention. Parts and percentages are by weight unless otherwise indicated or required by context.

Test Procedures

In the following examples, the heat-curable compositions were compounded on a two-roll mill, operated with slight cooling on one roll in accordance with ASTM D-15-72. The stock was sheeted off the mill and cut into test pieces about 1 $in^2$ (6.45 $cm^2$). Unless otherwise indicated, the compositions were tested for cure properties as measured by Mooney Viscosity and Mooney Scorch in accordance with ASTM D-1642-72 (viscosity and curing characteristics by Shearing-Disk Viscometer) using a Monsanto R-100 oscillating disk rheometer operating at a temperature of 320°F (160°C), a frequency of 1.7 Hz, and with the degree of rotation set at 3°. Three parameters were used to judge the effectiveness of a curing system: (a) Scorch Time — the time, in minutes, from the start of a curing test to the point at which the torque curve rises 2 inch-pounds (0.23 newton-meters) above the minimum torque value; (b) extent of cure ($\Delta T_{min-30}$) — the difference, in inch-pounds (newton-meters), between minimum torque value and torque value 30 minutes after the start of a curing test; (c) completeness of cure ($\Delta T_{25-30}$) — the torque value change, in inch-pounds (newton-meters), observed within the interval of 25 to 30 minutes after the start of a curing test.

The physical properties of the cured compositions were also determined including:

100 percent Modulus, 200 percent Modulus, Ultimate Tensile, and Elongation were measured in accordance with ASTM D-412-68 (Tension Testing of Vulcanized — Type "C" Dumbbell — Instron® Tensile Tester).

Hardness was measured in accordance with ASTM 2240-68 (Indentation Hardness of Rubber and Plastics by means of a type A Shore durometer).

Example 1

In accordance with the present invention, chlorinated polyethylene (CPE), obtained from The Dow Chemical Company as CM 0136, was compounded with a diamine diacetate having the formula:

$$(C_{18}H_{37}\overset{\oplus}{N}H_2\text{-}(CH_2)_x\text{-}\overset{\oplus}{N}H_3)(CH_3COO^{\ominus})_2$$

where $x = 3$, and various other ingredients in the following proportions:

| Ingredient | Parts |
|---|---|
| CPE (CM D136) | 100.0 |
| Carbon black | 40.0 |
| Extending oil | 15.0 |
| CaO | 10.0 |
| $S_8$ | 1.6 |
| NaI | 0.5 |
| Diamine diacetate | (0.0167 amine equivalent/100 g CPE) |

The resulting heat-curable composition (identified as Sample 1A) was then cured as earlier described.

For comparison, similar heat-curable compositions were prepared with various homologues of the diamine diacetate, i.e., wherein $X = 2$, 4, 5 and 6 (identified, respectively, as Samples 1B, 1C, 1D, and 1E), and tested under identical conditions.

The results of these tests, as shown in Table I demonstrate the surprising and unique curing properties of the diamine diacetate corresponding to 1,3-diaminopropane as compared to the homologues. Similar beneficial and unique results will be observed with any 1,3-diaminopropane or salt in accordance with the present invention.

TABLE I

| Sample | x | Scorch min | $\Delta T_{25-30}$ in-lb (N-m) | $\Delta T_{min-30}$ in-lb (N-m) |
|---|---|---|---|---|
| The Invention | | | | |
| 1A | 3 | 2.1 | 1.7 (0.19) | 59.1 (6.68) |
| For Comparison | | | | |
| 1B | 2 | 3.3 | 3.0 (0.34) | 36.6 (4.14) |
| 1C | 4 | 3.6 | 3.0 (0.34) | 29.8 (3.37) |
| 1D | 5 | 5.2 | 3.2 (0.36) | 32.2 (3.64) |
| 1E | 6 | 4.9 | 3.5 (0.40) | 30.6 (3.46) |

Example 2

In accordance with the present invention, various N-alkyl-1,3-diaminopropane diacetates having the general formula

$$(R\overset{\oplus}{N}H_2(CH_2)_3\overset{\oplus}{N}H_3)(CH_3CO_2^{\ominus})_2$$

were tested using the recipe of Example 1.

The results of these tests, as shown in Table II, demonstrate that the effectiveness of N-alkyl-1,3-diaminopropanes increases with increasing length of the alkyl chain. Based on this data, the preferred alkyl chain will have from 4 to 20 carbon atoms.

TABLE II

| Sample | R | $\Delta T_{min-30}$ in-lb (N-m) |
|---|---|---|
| 2A | H | 21.8 (2.46) |
| 2B | $C_4H_9$ | 41.0 (4.63) |
| 2C | $C_6H_{13}$ | 47.0* (5.31)* |
| 2D | $C_8H_{17}$ | 51.8 (5.85) |
| 2E | $C_{12}H_{25}$ | 55.4 (6.26) |
| 2F | $C_{16}H_{33}$ | 56.0 (6.33) |
| 2G | $C_{18}H_{37}$ | 59.1 (6.68) |

* Estimated.

Example 3

In accordance with the present invention, various substituted 1,3-diaminopropane diacetates were tested using the recipe of Example 1.

The results of these tests, as shown in Table III, demonstrate that the effectiveness of alkylsubstituted 1,3-diaminopropanes decreases with increasing substitution of the nitrogen moieties.

TABLE III

| Sample | Structure of Parent Diamine | Scorch (min) | $\Delta T_{25-30}$ in-lb (N-m) | $\Delta T_{min-30}$ in-lb (N-m) |
|---|---|---|---|---|
| 3A | 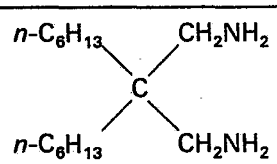 | 2.8 | 3.9 (0.44) | 62.6 (7.07) |
| 3B | $(n\text{-}C_{12}H_{25})NH(CH_2)_3NH_2$ | 2.1 | 1.7 (0.19) | 55.4 (6.26) |
| 3C | $(n\text{-}C_6H_{13})NH(CH_2)_3NH_2$ | — | — | 47.0* (5.31)* |
| 3D | $(n\text{-}C_6H_{13})NH(CH_2)_3NH(n\text{-}C_6H_{13})$ | 2.1 | 1.1 (0.12) | 43.8 (4.95) |
| 3E | $(n\text{-}C_6H_{13})_2N(CH_2)_3NH_2$ | 4.0 | 3.2 (0.36) | 37.0 (4.18) |
| 3F | $(n\text{-}C_4H_9)_2N(CH_2)_3N(n\text{-}C_4H_9)_2$ | 7.8 | 3.3 (0.37) | 20.8 (2.35) |

* Estimated from Table II.

Example 4

Various heat-curable compositions were prepared from the following ingredients (in parts by weight):

| Ingredient | Sample 4A | 4B | 4C | 4D[1] |
|---|---|---|---|---|
| CPE (CM 0136) | 100.0 | 100.0 | 100.0 | 100.0 |
| Carbon black | 40.0 | 40.0 | 40.0 | 40.0 |
| Extending oil | 15.0 | 15.0 | 15.0 | 15.0 |
| NaI | 0.5 | 0.5 | 0.5 | 0.5 |
| $S_8$ | 2.0 | 2.0 | — | 2.0 |
| MgO | 10.0 | — | 10.0 | 10.0 |
| Diamine diacetate[2] | 7.5 | 7.5 | 7.5 | — |

[1] Not within the scope of the present invention.

[2] A diacetate salt of N-aliphatic-1,3-diaminopropane, wherein the aliphatic group is derived from tallow and is principally a mixture of saturated and unsaturated $C_{16}$ and $C_{18}$ radicals.

The compositions were then cured and tested according to the procedures described earlier. The results of these tests, as shown in Table IV, demonstrate the synergistic effect on the extent of cure brought about by a combination of sulfur, an acid acceptor, and a 1,3-diaminopropane or salt.

TABLE IV

| Sample | $\Delta T_{min-30}$ in-lb (N-m) |
|---|---|
| The Invention | |
| 4A | 61.5 (6.95) |
| 4B | 16.0 (1.81) |
| 4C | 7.0 (0.79) |
| For Comparison | |
| 4D | 0.8 (0.09) |

Example 5

Various heat-curable compositions were prepared with different acid acceptors according to the following recipe:

| Ingredient | Parts |
|---|---|
| CPE (CM 0136) | 100.0 |
| Carbon black | 40.0 |
| Extending oil | 15.0 |
| Acid acceptor | 10.0 |
| Diamine diacetate of Example 4 | 3.8 |
| $S_8$ | 2.0 |
| NaI | 0.5 |

The results of these tests, as shown in Table V, demonstrate the variation in effectiveness of different acid acceptors. Only those acid acceptors which increase the extent of cure, as compared to heat-curable compositions not containing an acid acceptor, are suitable for use in the present invention.

TABLE V

| Sample | Acid Acceptor | $\Delta T_{min-30}$ in-lb (N-m) |
|---|---|---|
| Control | None | 16.0 (1.81) |
| For Comparison | | |
| 5A | $2PbCO_3 \cdot Pb(OH)_2$ | 2.4 (0.27) |
| 5B | $Ti(OC_{18}H_{37})_4$ | 9.5 (1.07) |
| The Invention | | |
| 5C | $CaCO_3$ | 18.0 (2.03) |
| 5D | Powdered 13× Molecular Sieve | 21.1 (2.38) |
| 5E | $Mg(OH)_2$ | 21.3 (2.41) |
| 5F | BaS | 24.0 (2.71) |
| 5G | CaS | 26.2 (2.96) |
| 5H | NaOH | 32.6 (3.68) |
| 5I | $Ba(OH)_2$ | 32.8 (3.71) |
| 5J | BaO | 39.2 (4.43) |
| 5K | $K_3PO_4 \cdot H_2O$ | 49.0 (5.54) |
| 5L | MgO | 50.0 (5.65) |
| 5M | CaO | 62.8 (7.10) |
| 5N | $Ca(OH)_2$ | 65.1 (7.36) |

Example 6

Various heat-curable compositions were prepared with different halopolymers according to the following recipes:

Recipe No. 1

| Ingredient | Parts |
|---|---|
| Halopolymer | 100.0 |
| Plasticizer | 15.0 |
| CaO | 10.0 |
| Diamine diacetate of Example 4 | 4.0 |
| $S_8$ | 1.6 |
| NaI | 0.5 |

Recipe No. 2

| Ingredient | Parts |
|---|---|
| Halopolymer | 100.0 |
| CaO | 10.0 |
| Diamine diacetate of Example 4 | 2.0 |
| $S_8$ | 0.8 |
| NaI | 0.5 |

The results of these tests, as shown in Table VI, demonstrate that a 1,3-diaminopropane or salt can be used to vulcanize a wide variety of heat-curable halopolymers. With respect to CPE, it appears to be advantageous to have a chlorine content greater than 25 percent in order to obtain an acceptable cure level. In addition, it is noted that the CPE sample which had been minimally brominated showed enhanced cure as compared to the non-brominated sample.

TABLE VI

| Sample | Recipe No. | Halopolymer | $\Delta T_{min-30}$ in-lb (N-m) |
|---|---|---|---|
| 6A | 1 | CPE:46% chlorine | 44.5 (5.03) |
| 6B | 1 | CPE:36% chlorine (CM 0136) | 42.5 (4.80) |
| 6C | 1 | CPE:25% chlorine | 9.8 (1.11) |
| 6D | 1 | Chlorosulfonated Polyethylene | 75.0 (8.48) |
| 6E | 1 | Polychloroprene | 35.5 (4.01) |
| 6F | 2 | CPE:36% chlorine (CM 0136) | 38.0 (4.29) |
| 6G | 2 | BrCPE:34% chlorine + 2.2% bromine (solution brominated CM 0136) | 55.0 (6.22) |

Example 7

Various heat-curable compositions were prepared from the ingredients shown in Table VII compounded as described with a two-roll mill. The resulting compositions were cured and tested.

The results of these tests, as shown in Table VIII, demonstrate that N-(cyclohexylthio)-phthalimide, but not N-nitrosodiphenylamine, alone effectively extends the shelf-life of the heat-curable composition as shown by the lack of a substantial increase in viscosity upon aging. The results further demonstrate that while neither N-(cyclohexylthio)phthalimide nor N-nitrosodiphenylamine alone significantly enhances scorch safety (as shown by the increase in Mooney scorch time), a synergistic combination of the two does.

TABLE VII

| | Control | The Invention | | | | |
|---|---|---|---|---|---|---|
| Ingredient | 1A | 1B | 1C | 1D | 1E | 1F |
| CPE (CM 0136)[1] | 100 | 100 | 100 | 100 | 100 | 100 |
| Extending oil | 30 | 30 | 30 | 30 | 30 | 30 |
| Carbon black | 60 | 60 | 60 | 60 | 60 | 60 |
| MgO | 5 | 5 | 5 | 5 | 5 | 5 |
| $S_8$ | 2 | 2 | 2 | 2 | 2 | 2 |
| Diamine diacetate[2] | 7 | 7 | 7 | 7 | 7 | 7 |
| N-(cyclohexylthio)phthalimide | — | 0.5 | 1 | — | 0.5 | 1 |
| N-nitrosodiphenylamine | — | — | — | 2 | 2 | 2 |
| Total | 204 | 204.5 | 205 | 206 | 206.5 | 207 |

Notes:

[1] An elastomer-forming, chlorinated high-density polyethylene having a chlorine content of 36%, residual crystallinity of less than 2%, and a gum stock Mooney Viscosity (ML 1 + 4 at 121°C) of 80 (obtained from The Dow Chemical Company).

[2] A diacetate salt of N-aliphatic-1,2-diaminopropane, wherein the aliphatic group is derived from tallow and is principally a mixture of saturated and unsaturated $C_{16}$ and $C_{18}$ moieties.

[3] Formulations are given in parts by weight.

TABLE VIII

| Properties | Control 1A | The Invention 1B | 1C | 1D | 1E | 1F |
|---|---|---|---|---|---|---|
| Mooney Viscosity: MS1 Min., 121°C in in-lb (N-m) | | | | | | |
| Initial | 30.0 (3.4) | 27.5 (3.1) | 27.0 (3.0) | 21.0 (2.4) | 25.0 (2.8) | 24.5 (2.8) |
| Aged 3 days at room temp. | 32.0 (3.6) | 28.5 (3.2) | 26.5 (3.0) | 28.0 (3.2)[a] | 25.0 (2.8) | 24.0 (2.7) |
| Aged 8 days at room temp. | 36.0 (4.1) | 29.5 (3.3) | 28.0 (3.2) | 32.0 (3.6)[b] | 25.5 (2.9) | 25.0 (2.8) |
| Aged 28 days at room temp. | 47.0 (5.3) | 34.0 (3.8) | 29.0 (3.3) | —[c]— | 28.0 (3.2) | 26.0 (2.9) |
| Mooney Scorch: MS1 (Δ5), 121°C in minutes | | | | | | |
| Initial | 4.0 | 5.0 | 6.5 | 7.0 | >20.0 | 26.0 |
| Aged 3 days at room temp. | 2.5 | 4.5 | 5.5 | 7.0[a] | 22.5 | 30.0 |
| Aged 8 days at room temp. | 2.5 | 4.0 | 6.0 | 8.0[b] | 21.0 | 32.0 |
| Aged 28 days at room temp. | 3.0 | 5.0 | 7.0 | —[c]— | 23.0 | >35.0 |
| Physical Properties After Curing 30 Minutes at 160°C | | | | | | |
| 100% Modulus, psi (kg/cm²) | 447 (31.4) | 469 (33.0) | 419 (29.5) | 427 (30.0) | 395 (27.8) | 333 (23.4) |
| 200% Modulus, psi (kg/cm²) | 1080 (75.9) | 1073 (75.4) | 930 (65.4) | 947 (66.6) | 850 (59.8) | 722 (50.8) |
| Ultimate Tensile, psi (kg/cm²) | 1953 (137.3) | 1951 (137.2) | 1860 (130.8) | 1813 (127.5) | 1800 (126.5) | 1778 (125.0) |
| Elongation, % | 470 | 500 | 520 | 470 | 550 | 600 |
| Hardness, Shore A | 69 | 70 | 69 | 67 | 69 | 66 |

Notes:
[a] Aged 4 days at room temperature.
[b] Aged 7 days at room temperature.
[c] Not measured.

## Claims

1. A heat-curable, elastomer-forming composition comprising (a) an elastomer-forming chlorine- or bromine-containing halopolymer, (b) 1 to 15 parts by weight of a member chosen from the group consisting of 1,3-diaminopropane, 1,3-diaminopropane wherein either the carbon or nitrogen moieties are singly or multiply substituted with alkyl, alkenyl, cycloalkyl or aryl groups and salts thereof per hundred parts by weight of the halopolymer, (c) a sulfur source, and (d) a member of the group consisting of oxides, hydroxides, sulfides, carbonates and phosphates of the alkali metals and alkaline earth metals and mixtures thereof.

2. The heat-curable composition of claim 1 wherein the halopolymer is a chlorinated polyethylene, chlorosulfonated polyethylene, bromochlorinated polyethylene or polychloroprene.

3. The heat-curable composition of claim 1 wherein the halopolymer is a chlorinated polyethylene having a chlorine content greater than 25 wt %.

4. The heat-curable composition of claim 1, 2 or 3 wherein component (b) is a 1,3-diaminopropane having single or multiple substitution of the carbon or nitrogen moieties with alkyl, alkenyl, cycloalkyl, or aryl groups.

5. The heat-curable composition of claim 4 wherein component (b) is an N-($C_4$—$C_{20}$)alkyl-1,3-diaminopropane.

6. The heat-curable composition of Claim 4 wherein component (b) is an N-aliphatic-1,3-diaminopropane wherein the aliphatic group is derived from tallow.

7. The heat-curable composition of Claim 4 wherein component (c) consists of 0.1 to 10 parts of elemental sulfur per 100 parts by weight of the halopolymer, and component (d) consists of 1 to 20 parts of an acid acceptor per 100 parts by weight of the halopolymer, said acid acceptor being calcium oxide, magnesium oxide, calcium hydroxide, or mixtures thereof.

8. The heat-curable composition of Claims 1 to 7 further containing a prevulcanization inhibitor combination comprising an amount of N-(cyclohexylthio)phthalimide and N-nitrosodiphenylamine sufficient to provide an increase in both shelf-life and scorch safety.

9. The heat-curable composition of Claim 8 wherein the halopolymer comprises an elastomer-forming chlorinated polyethylene, the amount of N-(cyclohexylthio)phthalimide is 0.1 to 2 parts per hundred parts of the halopolymer and the amount of N-nitrosodiphenylamine is 1 to 3 parts per hundred.

10. An improved method of preparing a heat-curable composition containing as defined in Claim 1 a chlorine- or bromine-containing halopolymer with a 1—15 parts by weight of a 1,3-diaminopropane or salt thereof, an acid acceptor (d), and a sulfur source, characterized by adding to the composition a prevulcanization inhibitor combination comprising an amount of N-(cyclohexylthio)-phthalimide and N-nitrosodiphenylamine sufficient to provide an increase in both shelf-life and scorch safety.

**Patentansprüche**

1. Hitzehärtbare, Elastomer bildende Zusammensetzung bestehend aus (a) einem Elastomer bildenden, Chlor oder Brom enthaltenden Halogenpolymer, (b) 1 bis 15 Gew.-% einer Verbindung ausgewählt aus der Gruppe, die aus 1,3-Diaminopropan, 1,3-Diaminopropan, bei dem entweder die Kohlenstoff- oder die Stickstoffanteile einzeln oder mehrfach durch Alkyl-, Alkenyl, Cycloalkyl- oder Arylgruppen und deren Salze ersetzt sind pro 100 Gew.-Teile des Halogenpolymers, (c) eine Schwefelquelle und (d) eine Verbindung aus der Gruppe, die aus den Oxiden, Hydroxiden, Sulfiden, Carbonaten und Phosphaten der Alkali- und Erdalkalimetalle und deren Mischungen besteht.

2. Hitzehärtbare Zusammensetzung nach Anspruch 1, dadurch gekennzeichnet, daß das Halogenpolymer ein chloriertes Polyäthylen, ein chlorsulfoniertes Polyäthylen, ein bromchloriertes Polyäthylen oder Polychloropren ist.

3. Hitzehärtbare Zusammensetzung nach Anspruch 1, dadurch gekennzeichnet, daß das Halogenpolymer ein chloriertes Polyäthylen ist mit einem Chlorgehalt, der größer als 25 Gew.-% ist.

4. Hitzehärtbare Zusammensetzung nach Anspruch 1, 2 oder 3, dadurch gekennzeichnet, daß die Komponente (b) 1,3-Diaminopropan ist, bei dem Kohlenstoff- oder Stickstoffanteile einfach oder mehrfach mit Alkyl-, Alkenyl-, Cycloalkyl- oder Arylgruppen substituiert sind.

5. Hitzehärtbare Zusammensetzung nach Anspruch 4, dadurch gekennzeichnet, daß die Komponente (b) N-($C_4$—$C_{20}$)-Alkyl-1,3-diaminopropan ist.

6. Hitzehärtbare Zusammensetzung nach Anspruch 4, dadurch gekennzeichnet, daß die Komponente (b) N-Aliphat-1,3-diaminopropan ist, bei dem die aliphatische Gruppe von Talg (tallow) abgeleitet ist.

7. Hitzehärtbare Zusammensetzung nach Anspruch 4, dadurch gekennzeichnet, daß die Komponente (c) aus 0,1 bis 10 Teilen elementarem Schwefel pro 100 Gew.-Teile des Halogenpolymers besteht und daß die Komponente (d) aus 1 bis 20 Teilen eines Säureakzeptors pro 100 Gew.-Teile des Halogenpolymers besteht, wobei dieser Säureakzeptor aus Calciumoxid, Magnesiumoxid, Calciumhydroxid oder Mischungen davon besteht.

8. Hitzehärtbare Zusammensetzung nach einem der Ansprüche 1 bis 7, dadurch gekennzeichnet, daß sie außerdem eine Prävulkanisationsinhibitor-Zusammensetzung enthält, die aus einer Menge von N-(Cyclohexylthio)-phthalimid und N-Nitrosodiphenylamin besteht, die ausreichend ist, um sowohl die Lagerbeständigkeit als auch den Prävulkanisationsschutz zu verbessern.

9. Hitzehärtbare Zusammensetzung nach Anspruch 8, dadurch gekennzeichnet, daß das Halogenpolymer aus einem Elastomer bildenden chlorierten Polyäthylen besteht und daß die Menge an N-(Cyclohexylthio)-phthalimid 0,1 bis 2 Teile pro 100 Teile an Halogenpolymer beträgt und die Menge an N-Nitrosodiphenylamin 1 bis 3 Teile pro 100 Teile beträgt.

10. Verbessertes Verfahren zur Herstellung von hitzehärtbaren Zusammensetzungen nach Anspruch 1, die ein chlor- oder bromhaltiges Halogenpolymer enthalten, mit 1 bis 15 Gew.-Teilen von 1,3-Diaminopropan oder einem Salz davon, einem Säureakzeptor (d) und einer Schwefelquelle, dadurch gekennzeichnet, daß der Zusammensetzung eine Prävulkanisationsinhibitor-Zusammensetzung

beigefügt wird, die aus einer Menge an N-(Cyclohexylthio)-phthalimid und N-Nitrosodiphenylamin besteht, die ausreichend ist, um sowohl die Lagerbeständigkeit als auch den Prävulkanisationsschutz verbessern.

## Revendications

1. Composition vulcanisable par la chaleur formant des élastomères comprenant (a) un polymère halogéné contenant du chlore ou du brome, formant élastomères (b) 1 à 15 parties en poids d'un membre choisi dans le groupe constitué par la 1,3-diaminopropane, la 1,3-diaminopropane dont la portion carbone ou azote sont substituées, une fois ou plusieurs fois, avec des groupes alkyle, alkényle, cycloalkyle ou aryle et leurs sels, pour cent parties en poids de polymère halogéné, (c) une source de soufre, et (d) un membre du groupe constitué d'oxydes, d'hydroxydes, sulfures, carbonates et phosphates des métaux alcalins et alcalino-terreux et leurs mélanges.

2. Composition vulcanisable par la chaleur selon la revendication 1, dans laquelle le polymère halogéné est du polyéthylène chloré, du polyéthylène sulfochloré, du polyéthylène bromochloré ou du polychloroprène.

3. Composition vulcanisable par la chaleur selon la revendication 1, dans laquelle le polymère halogéné est du polyéthylène chloré ayant une teneur en chlore supérieure à 25% en poids.

4. Composition vulcanisable par la chaleur selon les revendications 1, 2 ou 3, dans laquelle le constituant (b) est un 1,3-diaminopropane dont les portions carbone ou azote sont substituées une fois ou plusieurs fois par des groupes alkyle, alkényle, cycloalkyle ou aryle.

5. Composition vulcanisable par la chaleur selon la revendication 4, dans laquelle le composant (b) est le N-($C_4$—$C_{20}$) alkyl-1,3-diaminopropane.

6. Composition vulcanisable par la chaleur selon la revendication 4, dans laquelle le composant (b) est un groupe N-aliphatique-1,3-diaminopropane dans lequel le groupe aliphatique dérive du suif.

7. Composition vulcanisable par la chaleur selon la revendication 4, dans laquelle le composant (c) est constitué de 0,1 à 10 parties de soufre élémentaire pour 100 parties en poids de polymère halogéné, et le composant (d) est constitué de 1 à 20 parties en poids d'un accepteur acide pour 100 parties en poids de polymère halogéné, ledit accepteur acide étant l'oxyde de calcium, l'oxyde de magnésium, l'hydroxyde de calcium ou leurs mélanges.

8. Composition vulcanisable par la chaleur selon les revendications 1 à 7, contenant en outre une combinaison d'inhibiteur de prévulcanisation comprenant une quantité de N-(cyclohexylthio) phtalimide et de N-nitrosodiphénylamine suffisante pour provoquer une augmentation à la fois de la durée de conservation et de la sécurité au grillage.

9. Composition vulcanisable par la chaleur selon la revendication 8, dans laquelle le polymère halogéné comprend un polyéthylène chloré formant élastomère, la quantité de N-(cyclohexylthio) phtalimide est de 0,1 à 2 parties pour 100 parties de polymère halogéné et la quantité de N-nitrosodiphénylamine est de 1 à 3 parties pour cent.

10. Procédé perfectionné pour la préparation d'une composition vulcanisable par la chaleur contenant, comme indiqué dans la revendication 1, un polymère halogéné contenant du chlore ou du brome avec 1—15 parties en poids d'une 1,3-diaminopropane ou son sel, un accepteur d'acide, et une source de soufre, caractérisé en ce qu'on ajoute à la composition une combinaison d'inhibiteur de prévulcanisation comprenant une quantité de N-(cyclohexylthio) phtalimide et de N-nitrosodiphénylamine suffisante pour provoquer une augmentation à la fois de la durée de conservation et de la sécurité au grillage.